# EUROPEAN PATENT APPLICATION

(11) **EP 4 835 154 A1**
(43) Date of publication of application: **04.11.2026**
(21) Application number: 24913215.0
(22) Date of filing: 04.07.2024
(51) Int. Cl.: C25B 11/053, C25B 11/065, C25B 11/031, C25B 11/093, C25B 1/04, C25B 9/00

(54) **MEMBRANE-ELECTRODE ASSEMBLY FOR WATER ELECTROLYSIS CELL, MANUFACTURING METHOD THEREFOR, AND WATER ELECTROLYSIS CELL COMPRISING MEMBRANE-ELECTRODE ASSEMBLY**

(30) Priority: 28.12.2023 KR 20230194781; 16.05.2024 KR 20240063789
(71) Applicant: Kolon Industries, Inc., Seoul 07793 (KR)
(72) Inventor: KIM, Jung Ho, Seoul 07793 (KR); KIM, Jun Young, Seoul 07793 (KR); LEE, Jusung, Seoul 07793 (KR); LIM, Youngjoon, Seoul 07793 (KR); PARK, Hyun Jin, Seoul 07793 (KR)
(74) Representative: Vossius & Partner Patentanwälte Rechtsanwälte mbB
(86) International application number: PCT/KR2024/009484
(87) International publication number: WO 2025/143401

(57) **Abstract**

The present disclosure relates to a membrane-electrode assembly for a water electrolysis cell, a manufacturing method therefor, and a water electrolysis cell comprising the membrane-electrode assembly for the water electrolysis cell. The membrane-electrode assembly for the water electrolysis cell comprises: a first ion conductor for forming a coating layer coated on the surface of a oxygen evolution reaction catalyst; and a second ion conductor, which is not coated on the surface of the oxygen evolution reaction catalyst, and thus the interfacial binding strength between a polymer electrolyte membrane or a porous diffusion layer (PTL) and the oxygen evolution reaction catalyst can be increased to improve mass transfer, performance and durability.

## Description

### [Technical Field]

The present disclosure relates to a membrane-electrode assembly for a water electrolysis cell, a method for manufacturing the same, and a water electrolysis cell including the membrane-electrode assembly for a water electrolysis cell, and more particularly, to a membrane-electrode assembly for a water electrolysis cell, a method for manufacturing the same, and a water electrolysis cell including the membrane-electrode assembly for a water electrolysis cell, in which an interfacial binding strength between a polymer electrolyte membrane or a porous transport layer (PTL) and a catalyst layer for an oxygen evolution reaction is increased while using a CCM (Catalyst Coated Membrane) method, thereby improving mass transfer, performance, and durability.

The present disclosure relates to a result of a project (Project Number: 20022451) conducted with the support of the materials and components technology development program of the Ministry of Trade, Industry and Energy and the Korea Evaluation Institute of Industrial Technology (KEIT).

### [Background Art]

Recent energy demands and environments require sustainability, environmental friendliness, and high efficiency, and among them, hydrogen is receiving attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels.

Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

Types of the water electrolysis representatively include polymer electrolyte membrane (PEM), alkaline electrolysis (AEC), anion exchange membrane (AEM), and solid oxide electrolysis cells (SOECs) according to the electrolyte membrane.

Among them, in a system of a polymer electrolyte membrane water electrolysis cell (PEMWE), a membrane-electrode assembly (MEA) that actually generates hydrogen has a structure in which an oxygen evolution electrode, which is an electrode where an oxygen evolution reaction occurs, and a hydrogen evolution electrode, which is an electrode where a hydrogen evolution reaction occurs, are positioned with a polymer electrolyte membrane including a hydrogen ion-conductive polymer interposed therebetween.

In addition, on an outer portion of the electrode, that is, an outer portion where the oxygen evolution electrode and the hydrogen evolution electrode are positioned, a gas diffusion layer (GDL) or a porous transport layer (PTL) and a gasket are sequentially stacked, a separation plate in which a flow field is formed to supply water and discharge hydrogen generated by a reaction is positioned outside the gas diffusion layer or the porous transport layer, and an end plate for supporting or fixing the respective components is coupled to an outermost portion.

In order to manufacture such a membrane-electrode assembly, a technology of positioning the oxygen evolution electrode and the hydrogen evolution electrode on both surfaces of the polymer electrolyte membrane is required. The technology is largely divided into a CCS (Catalyst Coated Substrate) method and a CCM (Catalyst Coated Membrane) method. The CCS method is a method of forming a catalyst layer on the gas diffusion layer (GDL) or the porous transport layer (PTL) and then bonding it to the polymer electrolyte membrane through hot-pressing, and the CCM method mainly refers to a method of directly bonding the catalyst layer to the polymer electrolyte membrane (Membrane).

The CCM method is divided into a direct coating method and a decal lamination method. The direct coating method is a method of forming an electrode by directly coating an electrode slurry on the polymer electrolyte membrane, and the decal lamination method is a method using a process comprising: coating an electrode slurry, in which a catalyst, an ion conductor, and a solvent are mixed, on a support of a release film such as Teflon, an imide film, or the like, drying it to generate a catalyst layer, and then arranging the catalyst layer on at least one side of the polymer electrolyte membrane and applying heat and pressure to transfer it. The decal lamination method generally transfers the electrode to the polymer electrolyte membrane by using a flat hot press or a roll press.

The direct coating method has a problem in that it is difficult to secure processability for mass production due to a characteristic that the polymer electrolyte membrane is easily changed when contacting the electrode slurry or being exposed to moisture.

The decal lamination method generally has a problem in that, when thermal transfer is performed using a flat press or a roll press, it is difficult to apply an even pressure to an entire area of the electrode, and accordingly, it is difficult to secure uniformity of a product and quality is degraded, thereby degrading performance of a fuel cell.

### [Disclosure]

### [Technical Problem]

According to an embodiment, there is provided a membrane-electrode assembly for a water electrolysis cell comprising a first ion conductor forming a coating layer on a surface of a catalyst for an oxygen evolution reaction and a second ion conductor not coated on the surface of the catalyst for an oxygen evolution reaction, wherein an interfacial binding strength between a polymer electrolyte membrane or a porous transport layer (PTL) and a catalyst layer for an oxygen evolution reaction is increased, thereby improving mass transfer, performance, and durability.

According to another embodiment, a method for manufacturing a membrane-electrode assembly for a water electrolysis cell is provided.

According to another embodiment, a water electrolysis cell including the membrane-electrode assembly is provided.

### [Technical Solution]

According to an embodiment, a membrane-electrode assembly for a water electrolysis cell comprises a polymer electrolyte membrane; and an oxygen evolution electrode positioned on one surface of the polymer electrolyte membrane and comprising a catalyst layer for an oxygen evolution reaction; and a hydrogen evolution electrode positioned on the other surface of the polymer electrolyte membrane, wherein the catalyst layer for an oxygen evolution reaction comprises a catalyst for an oxygen evolution reaction comprising active particles comprising a first noble metal oxide; a coating layer coating a surface of the catalyst for an oxygen evolution reaction and comprising a first ion conductor; and a second ion conductor not coated on the surface of the catalyst for an oxygen evolution reaction.

The first noble metal oxide may include IrOₓ (wherein x is an integer of 1 to 3), RuOₓ (wherein x is an integer of 1 to 3), IrMOₓ (wherein M includes Ru, Pt, Sn, Se, Sb, Ta, Te, Nb, W, Zn, Au, or a combination thereof, and x is an integer of 1 to 3), or a combination thereof.

The catalyst for an oxygen evolution reaction may further comprise a support supporting the active particles, and the support may comprise a second noble metal oxide different from the first noble metal oxide.

An area of the coating layer may be greater than or equal to 30% relative to an entire surface of the catalyst for an oxygen evolution reaction.

A thickness of the coating layer may be in a range of 1 nm to 15 nm.

The first ion conductor may be included in a range of 3 parts by weight to 50 parts by weight based on 100 parts by weight of the catalyst for an oxygen evolution reaction.

The first ion conductor and the second ion conductor may each independently comprise a fluorine-based ion conductor, a hydrocarbon-based ion conductor, or a combination thereof, and the first ion conductor and the second ion conductor may be identical to or different from each other.

The equivalents weights (EWs) of the first ion conductor and the second ion conductor may each independently be in a range of 600 g/eq to 1100 g/eq, and the equivalent weight of the first ion conductor and the equivalent weight of the second ion conductor may be different from each other.

Any one of the first ion conductor and the second ion conductor may be a fluorine-based ion conductor, and the other may be a hydrocarbon-based ion conductor; the first ion conductor may be a first hydrocarbon-based ion conductor, and the second ion conductor may be a second hydrocarbon-based ion conductor different from the first hydrocarbon-based ion conductor; or the first ion conductor may be a first fluorine-based ion conductor, and the second ion conductor may be a second fluorine-based ion conductor different from the first fluorine-based ion conductor.

The second ion conductor may be included in a range of 20 parts by weight to 80 parts by weight based on 100 parts by weight of a total content of the first ion conductor and the second ion conductor included in the catalyst layer for an oxygen evolution reaction.

The catalyst layer for an oxygen evolution reaction may further comprise a functional additive including a radical scavenger, gas barrier particles, a hydrophilic inorganic additive, a heat dissipation material, or a combination thereof.

The functional additive may be included in a range of 1 part by weight to 20 parts by weight based on 100 parts by weight of the second ion conductor.

The membrane-electrode assembly for a water electrolysis cell may further comprise an ionomer-rich layer positioned between the catalyst layer for an oxygen evolution reaction and the polymer electrolyte membrane, and including the second ion conductor.

The hydrogen evolution electrode may comprise a catalyst for hydrogen evolution including a carbon-based support, and active particles supported on the carbon-based support and including a noble metal.

The polymer electrolyte membrane may comprise a porous support including a plurality of pores, and an ion conductor filling the pores of the porous support.

According to another embodiment, a method for manufacturing a membrane-electrode assembly for a water electrolysis cell comprises mixing a catalyst for an oxygen evolution reaction and a first ion conductor and then performing a heat treatment to prepare the catalyst for an oxygen evolution reaction coated with the first ion conductor (S1); adding the catalyst for an oxygen evolution reaction coated with the first ion conductor and a second ion conductor to a solvent to prepare a composition for forming a catalyst layer (S2); and forming a catalyst layer for an oxygen evolution reaction on at least one surface of a polymer electrolyte membrane by using the composition for forming a catalyst layer (S3), wherein the catalyst for an oxygen evolution reaction comprises active particles including a first noble metal oxide, and the catalyst for an oxygen evolution reaction coated with the first ion conductor includes the catalyst for an oxygen evolution reaction and a coating layer coating a surface of the catalyst for an oxygen evolution reaction and including the first ion conductor.

In the step S1, the heat treatment may be performed at a temperature in a range of 110°C to 220°C for 1 hour to 4 hours.

In the step S3, forming the catalyst layer for an oxygen evolution reaction may comprise directly coating the composition for forming a catalyst layer on the polymer electrolyte membrane, or coating the composition for forming a catalyst layer on a substrate to form the catalyst layer for an oxygen evolution reaction and then transferring the catalyst layer for an oxygen evolution reaction onto the polymer electrolyte membrane.

After step S3, the method further comprises a drying step, wherein the drying step is performed at a temperature in a range of 60°C to 110°C for 3 minutes to 50 minutes, and in the drying step, the second ion conductor not coated on the surface of the catalyst for an oxygen evolution reaction may settle toward the polymer electrolyte membrane to form an ionomer-rich layer.

According to another embodiment, a water electrolysis cell comprises the membrane-electrode assembly for a water electrolysis cell.

### [Advantageous Effects]

According to an embodiment, a membrane-electrode assembly for a water electrolysis cell comprises a first ion conductor forming a coating layer coated on a surface of a catalyst for an oxygen evolution reaction and a second ion conductor not coated on the surface of the catalyst for an oxygen evolution reaction, whereby interfacial binding strength between a polymer electrolyte membrane or a porous transport layer (PTL) and a catalyst layer for an oxygen evolution reaction may be increased, and mass transfer, performance, and durability may be improved.

### [Brief Description Of The Drawings]

FIG. 1 is a schematic diagram illustrating a process of forming a catalyst for an oxygen evolution reaction coated with a first ion conductor according to an embodiment.
FIGS. 2 and 3 are schematic diagrams illustrating that, in a method for manufacturing a membrane-electrode assembly according to an embodiment, as a composition for forming a catalyst layer is coated on one surface of a polymer electrolyte membrane or a substrate and then dried, a second ion conductor settles to an interface between the polymer electrolyte membrane or the substrate and a catalyst layer for an oxygen evolution reaction.
FIG. 4 is a transmission electron microscope (TEM) image of a catalyst for an oxygen evolution reaction coated with a first ion conductor according to Preparation Example 1.
FIGS. 5 and 6 are scanning electron microscope (SEM) images illustrating cross-sections of catalyst layers of membrane-electrode assemblies prepared in Examples 1-1 to 1-2.
FIGS. 7 to 10 are scanning electron microscope (SEM) images illustrating surfaces of catalyst layers of membrane-electrode assemblies prepared in Examples 2-1 to 3 and Comparative Example 1.
FIG. 11 is a graph illustrating results of evaluating I-V characteristics of membrane-electrode assemblies prepared in Examples 1-1 to 3 and Comparative Example 1.

### [Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" means a mixture, a laminate, a composite, a copolymer, an alloy, a blend, a reaction product, or the like of components.

In the present specification, terms such as "include", "comprise", or "have" are intended to designate the presence of implemented features, numbers, steps, components, or a combination thereof, and it should be understood that they do not preclude the possibility of the presence or addition of one or more other features, numbers, steps, components, or a combination thereof.

In the present specification, terms are used only for the purpose of distinguishing one component from another component. A singular expression includes a plural expression unless the context clearly indicates otherwise.

Unless otherwise defined in the present specification, "substituted" means that a hydrogen atom in a compound is substituted with a substituent including a halogen atom (F, Cl, Br, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, phosphoric acid or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, or a combination thereof.

Unless otherwise defined in the present specification, "alkyl group" means a straight-chain or branched-chain, saturated, monovalent hydrocarbon group (for example, a methyl group, an ethyl group, a propyl group, an isobutyl group, a sec-butyl group, a tert-butyl group, a pentyl group, an iso-amyl group, a hexyl group, etc.).

Unless otherwise defined in the present specification, "alkenyl group" refers to a straight-chain or branched-chain, unsaturated, monovalent hydrocarbon group having at least one carbon-carbon double bond (for example, an ethenyl group).

Unless otherwise defined in the present specification, "alkoxy group" refers to an alkyl group linked through oxygen, and means, for example, a methoxy group, an ethoxy group, and a sec-butyloxy group.

In the present specification, steps denoted by S1, S2, S3, , Sn, etc. are referred to each step for convenience, and do not mean that each step proceeds in a chronological order or that additional steps are not included between the steps.

### Membrane-electrode assembly for a water electrolysis cell

According to an embodiment, a membrane-electrode assembly for a water electrolysis cell comprises a polymer electrolyte membrane; and an oxygen evolution electrode positioned on one surface of the polymer electrolyte membrane and comprising a catalyst layer for an oxygen evolution reaction; and a hydrogen evolution electrode positioned on the other surface of the polymer electrolyte membrane.

Hereinafter, the oxygen evolution electrode, the hydrogen evolution electrode, and the polymer electrolyte membrane will be described.

The oxygen evolution electrode refers to an electrode in which an oxygen evolution reaction (OER) occurs.

According to an embodiment, the catalyst layer for an oxygen evolution reaction included in the oxygen evolution electrode comprises a catalyst for an oxygen evolution reaction including active particles containing a first noble metal oxide, a coating layer coating a surface of the catalyst for an oxygen evolution reaction and including a first ion conductor, and a second ion conductor not coated on the surface of the catalyst for an oxygen evolution reaction.

The first noble metal oxide is defined such that the noble metal oxide included in the active particles is denoted as "first" and the noble metal oxide included in a support, which will be described later, is denoted as "second" to distinguish between the noble metal oxide included in the active particles and the noble metal oxide included in the support. Such notation merely helps to clearly distinguish the noble metal oxides included in the active particles and the support, and this order does not indicate a specific priority regarding their characteristics.

The first noble metal oxide may include IrOₓ (wherein x is an integer of 1 to 3), RuOₓ (wherein x is an integer of 1 to 3), IrMOₓ (wherein M includes Ru, Pt, Sn, Se, Sb, Ta, Te, Nb, W, Zn, Au, or a combination thereof, and x is an integer of 1 to 3), or a combination thereof.

The catalyst for an oxygen evolution reaction may solely comprise the active particles including the first noble metal oxide or may further comprise a support supporting the active particles.

The support may comprise a second noble metal oxide different from the first noble metal oxide.

The type of the second noble metal oxide is not limited as long as it may be typically used as a support for supporting the catalyst for an oxygen evolution reaction.

For example, the second noble metal oxide may include tungsten oxide, titanium oxide, nickel oxide, ruthenium oxide, tantalum oxide, tin oxide, cobalt oxide, or a combination thereof.

The coating layer comprises the first ion conductor.

The first ion conductor may include a fluorine-based ion conductor, a hydrocarbon-based ion conductor, or a mixture thereof. Regarding the first ion conductor, in order to distinguish an ion conductor coated on the surface of the catalyst for an oxygen evolution reaction and an ion conductor not coated on the surface of the catalyst for an oxygen evolution reaction to be described later, the ion conductor coated on the surface of the catalyst for an oxygen evolution reaction is denoted as "first", and the ion conductor not coated on the surface of the catalyst for an oxygen evolution reaction is denoted as "second". Such denotation merely helps to clearly distinguish the ion conductor coated on the surface of the catalyst for an oxygen evolution reaction and the ion conductor not coated on the surface of the catalyst for an oxygen evolution reaction, and this order does not indicate a specific priority regarding their characteristics.

The fluorine-based ion conductor is (i) a fluorine-based polymer including fluorine in a main chain, or (ii) a partially fluorinated polymer such as a polystyrene-graft-ethylenetetrafluoroethylene copolymer, a polystyrene-graft-polytetrafluoroethylene copolymer, or the like, having a cation exchange group or an anion exchange group.

The cation exchange group is a functional group capable of transferring cations such as protons, and may be, for example, an acidic group such as a sulfonic acid group, a carboxyl group, a boronic acid group, a phosphoric acid group, an imide group, a sulfonimide group, a sulfonamide group, or the like.

The anion exchange group is a functional group capable of transferring anions such as a hydroxy ion, a carbonate ion, or a bicarbonate ion.

Examples of the fluorine-based ion conductor include (i) poly(perfluorosulfonic acid), (ii) poly(perfluorocarboxylic acid), (iii) a copolymer of tetrafluoroethylene and fluorovinyl ether including a sulfonic acid group, and (iv) defluorinated sulfurized polyether ketone, but are not limited thereto.

The hydrocarbon-based ion conductor is a hydrocarbon-based polymer having a cation exchange group or an anion exchange group (for example, a hydrocarbon-based polymer including an imidazole, a benzimidazole, a polyamide, a polyamideimide, a polyimide, a polyacetal, a polyethylene, a polypropylene, an acrylic resin, a polysulfone, a polyether, a polyester, a polyethersulfone, a polyetherimide, a polycarbonate, a polystyrene, a polyphenylene sulfide, a polyetheretherketone, a polyetherketone, a polyarylethersulfone, a polyphosphazene, a polyphenylquinoxaline, or a combination thereof in a main chain).

The hydrocarbon-based ion conductor includes, but is not limited to, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ethernitrile, sulfonated polyarylene ether ether nitrile, and sulfonated polyarylene ether sulfone ketone.

A method of forming the coating layer on the surface of the catalyst for an oxygen evolution reaction may be performed according to a known method, and may be performed according to a method to be described later.

The area of the coating layer may be within a predetermined range with respect to the entire surface of the catalyst for an oxygen evolution reaction. By adjusting the area of the coating layer with respect to the total surface area of the catalyst for an oxygen evolution reaction to be within a predetermined range, it may contribute to forming an organic structure of the catalyst layer for an oxygen evolution reaction to facilitate configuration of ion and electron transfer paths, thereby improving performance, and may increase a bond between catalysts for an oxygen evolution reaction and between the catalyst for an oxygen evolution reaction and the second ion conductor, thereby providing a membrane-electrode assembly having improved durability.

For example, a lower limit of the area of the coating layer with respect to the entire surface of the catalyst for an oxygen evolution reaction may be about 30%, 35%, 40%, 45%, 50%, 55%, 60%, 65%, 70%, 75%, 80%, 85%, 90%, 91%, 92%, 93%, 94%, 95%, 96%, 97%, 98%, 99%, or 100%, and an upper limit thereof is not limited, but may be about 100%, 99%, 98%, 97%, 96%, 95%, 90%, or 85%.

The area of the coating layer, with respect to the total surface area of the catalyst for an oxygen evolution reaction, may be greater than or equal to, or greater than any one lower limit among the above-described lower limits; or may have a range of greater than or equal to, or greater than any one lower limit among the above-described lower limits, while being less than or equal to, or less than any one upper limit among the above-described upper limits. The area of the coating layer may be adjusted according to the weight of the first ion conductor with respect to 100 parts by weight of the catalyst for an oxygen evolution reaction.

The coating layer coating the surface of the catalyst for an oxygen evolution reaction means that, when the catalyst for an oxygen evolution reaction comprises only active particles, the coating layer is present on the surface of the active particles, and when the catalyst for an oxygen evolution reaction further comprises the active particles and a support supporting the active particles, the coating layer is present of the surface of the active particles and/or on the surface of the support.

The coating layer may have a thickness within a predetermined range. For example, a lower limit of the thickness of the coating layer may be about 1 nm, 2 nm, 3 nm, 4 nm, 5 nm, 6 nm, 7 nm, 8 nm, 9 nm, or 10 nm, and an upper limit thereof may be about 15 nm, 14 nm, 13 nm, 12 nm, 11 nm, or 10 nm.

The thickness of the coating layer may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits, while being less than or equal to, or less than any one upper limit among the above-described upper limits.

The first ion conductor may be included within a predetermined range with respect to 100 parts by weight of the catalyst for an oxygen evolution reaction. As described above, since the area of the coating layer may be adjusted according to a content of the first ion conductor with respect to 100 parts by weight of the catalyst for an oxygen evolution reaction, the content of the first ion conductor may be appropriately adjusted to secure the area of the coating layer within the above-described range.

For example, a lower limit of the content of the first ion conductor with respect to 100 parts by weight of the catalyst for an oxygen evolution reaction may be about 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, or 20 parts by weight, and an upper limit thereof may be about 50 parts by weight, 48 parts by weight, 46 parts by weight, 44 parts by weight, 42 parts by weight, 40 parts by weight, 38 parts by weight, 36 parts by weight, 34 parts by weight, 32 parts by weight, 30 parts by weight, 28 parts by weight, 26 parts by weight, 24 parts by weight, 22 parts by weight, or 20 parts by weight.

The content of the first ion conductor may be, greater than or equal to, or greater than any one lower limit among the above-described lower limits; may be less than or equal to, or less than any one upper limit among the above-described upper limits; or may be included within a range of greater than or equal to, or greater than any one lower limit among the above-described lower limits, while being less than or equal to, or less than any one upper limit among the above-described upper limits, based on 100 parts by weight of the catalyst for an oxygen evolution reaction. Since the first ion conductor is included within a predetermined range relative to 100 parts by weight of the catalyst for an oxygen evolution reaction, it may contribute to forming an organized structure of the catalyst layer for an oxygen evolution reaction to facilitate the configuration of ion and electron transfer paths, thereby improving performance, and may increase the bonding between the catalysts for an oxygen evolution reaction and between the catalyst for an oxygen evolution reaction and the second ion conductor, thereby providing a membrane-electrode assembly having improved durability.

The second ion conductor is not coated on the surface of the catalyst for an oxygen evolution reaction.

The second ion conductor may be the same as or different from the first ion conductor. That is, the first ion conductor and the second ion conductor may each independently comprise a fluorine-based ion conductor, a hydrocarbon-based ion conductor, or a combination thereof. The meaning of "each independently" means that the types of the first ion conductor and the second ion conductor may each include a fluorine-based ion conductor, a hydrocarbon-based ion conductor, or a combination thereof, and that the first ion conductor and the second ion conductor may be identical to or different from each other.

For example, the second ion conductor and the first ion conductor may be the same. In this case, examples of the second ion conductor are the same as described for the first ion conductor.

As another example, the second ion conductor and the first ion conductor may be different.

According to an embodiment, the first ion conductor and the second ion conductor may have different equivalent weight (EWs). For example, equivalent weight (EWs) of the first ion conductor and the second ion conductor may each independently be in a range of 600 g/eq to 1100 g/eq, and the equivalent weight of the first ion conductor and the equivalent weight of the second ion conductor may be different from each other.

According to another embodiment, any one of the first ion conductor and the second ion conductor may be a fluorine-based ion conductor, and the other may be a hydrocarbon-based ion conductor.

According to another embodiment, the first ion conductor may be a first hydrocarbon-based ion conductor, and the second ion conductor may be a second hydrocarbon-based ion conductor different from the first hydrocarbon-based ion conductor. The terms "first" and "second" in the first hydrocarbon-based ion conductor and the second hydrocarbon-based ion conductor are used to distinguish between different hydrocarbon-based ion conductors. Such denotation merely helps to clearly identify that the first hydrocarbon-based ion conductor and the second hydrocarbon-based ion conductor are different from each other, and this order does not indicate a specific priority regarding their characteristics.

Examples of the first hydrocarbon-based ion conductor and the second hydrocarbon-based ion conductor are the same as described for the first ion conductor.

According to another embodiment, the first ion conductor may be a first fluorine-based ion conductor, and the second ion conductor may be a second fluorine-based ion conductor different from the first fluorine-based ion conductor. In the first fluorine-based ion conductor and the second fluorine-based ion conductor, "first" and "second" are the same as described for "first" and "second" in the first hydrocarbon-based ion conductor and the second hydrocarbon-based ion conductor.

Examples of the first fluorine-based ion conductor and the second fluorine-based ion conductor are the same as described for the first ion conductor.

The second ion conductor may be included within a predetermined range based on 100 parts by weight of a total content of the first ion conductor and the second ion conductor included in the catalyst layer for an oxygen evolution reaction.

For example, based on 100 parts by weight of the total content of the first ion conductor and the second ion conductor included in the catalyst layer for an oxygen evolution reaction, a lower limit of the content of the second ion conductor may be about 20 parts by weight, 25 parts by weight, 30 parts by weight, 35 parts by weight, 40 parts by weight, 45 parts by weight, 50 parts by weight, 55 parts by weight, or 60 parts by weight, and an upper limit thereof may be about 80 parts by weight, 78 parts by weight, 76 parts by weight, 74 parts by weight, 72 parts by weight, 70 parts by weight, 68 parts by weight, 66 parts by weight, 64 parts by weight, 62 parts by weight, or 60 parts by weight.

The second ion conductor may be, based on 100 parts by weight of the total content of the first ion conductor and the second ion conductor included in the catalyst layer for an oxygen evolution reaction, greater than or equal to, or greater than any one lower limit among the above-described lower limits; may be less than or equal to, or less than any one upper limit among the above-described upper limits; or may be included within a range of greater than or equal to, or greater than any one lower limit among the above-described lower limits, while being less than or equal to, or less than any one upper limit among the above-described upper limits.

By including the second ion conductor within the above range in the catalyst layer for an oxygen evolution reaction, the second ion conductor may increase an interfacial binding strength by forming an ion conductor layer or a functional ion conductor layer between the polymer electrolyte membrane and the catalyst layer for an oxygen evolution reaction, thereby improving mass transfer, performance, and durability.

A size of the second ion conductor may be within a predetermined range.

For example, a lower limit of the size of the second ion conductor may be about 30 nm or 35 nm, and an upper limit thereof may be about 400 nm or 380 nm.

The size of the second ion conductor may be greater than or equal to, or greater than any one of the above-described lower limits; less than or equal to, or less than any one of the above-described upper limits; or in a range of greater than or equal to, or greater than any one of the above-described lower limits and less than or equal to, or less than any one of the above-described upper limits.

When the second ion conductor has a size within the range, materials may be smoothly transferred, and a generation position of the ionomer-rich layer may be appropriately adjusted.

The second ion conductor may have a spherical shape, an ellipsoidal shape, a rod shape, or a coil shape.

In addition, the catalyst layer for an oxygen evolution reaction may further comprise a functional additive. By including the functional additive, hydrogen permeation resistance or oxygen permeability of the membrane-electrode assembly may be increased.

The functional additive may include a radical scavenger, gas barrier particles, a hydrophilic inorganic additive, a heat dissipation material, or a combination thereof.

The radical scavenger is an ion of a transition metal that may decompose hydrogen peroxide into water and oxygen to suppress generation of hydroxy radicals, and may include, for example, cerium, tungsten, ruthenium, palladium, silver, rhodium, cerium, zirconium, yttrium, manganese, molybdenum, lead, vanadium, titanium, and the like, and may be the metals themselves, an ionic form thereof, an oxide form thereof, a salt form thereof, or another form.

The radical scavenger may be CeO₂, MnO₂, CsO₂, ZrO₂, Ru, Ag, RuO₂, WO₃, Fe₃O₄, CePO₄, CrPO₄, AlPO₄, FePO₄, CeF₃, FeF₃, Ce₂(CO₃)₃·8H₂O, Ce(CHCOO)₃·H₂O, CeCl₃·6 H2O, Ce(NO₃)₆·6H₂O, Ce(NH₄)₂(NO₃)₆, Ce(NH₄)₄(SO₄)₄·4H₂O, Ce(CH₃COCHCOCH₃)₃·3H₂O, Fe-porphyrin, Co-porphyrin, or a mixture thereof.

The gas barrier particles may be clay, montmorillonite, saponite, laponite, mica, fluorohectorite, kaolinite, vermiculite, or a mixture thereof.

The hydrophilic inorganic additive may be SnO₂, silica, alumina, zirconia, mica, zeolite, phosphotungstic acid, silicon tungstic acid, zirconium hydrogen phosphate, or a combination thereof. The hydrophilic inorganic additive may prevent a degradation phenomenon of hydrogen ion conductivity under a high-temperature and low-humidity condition.

The heat dissipation material may be metal nanoparticles, ceramic nanoparticles, ultra-high molecular weight polyethylene, polyacetylene, polyimide, carbon-based nanoparticles, or a combination thereof.

For example, the heat dissipation material may be ceramic nanoparticles.

The ceramic nanoparticles may be boron nitride, aluminum nitride, aluminum oxide, silicon carbide, beryllium oxide, or a combination thereof. Such ceramic nanoparticles have excellent thermal conductivity, and thus may serve to easily transfer heat to the outside of the catalyst layer for an oxygen evolution reaction to be described later, and prevent moisture in the catalyst layer for an oxygen evolution reaction from evaporating.

In particular, hexagonal boron nitride (h-BN) among the boron nitride has physical properties and a plate-like structure similar to those of graphite compared to general boron nitride, and thus has excellent thermal conductivity, insulation, and chemical stability at a high temperature.

An average diameter of the ceramic nanoparticles is not limited, but, for example, may be in a range of 10 nm to 500 nm or 30 nm to 300 nm.

The functional additive may be included within a predetermined range based on 100 parts by weight of the second ion conductor.

Based on 100 parts by weight of the second ion conductor, a lower limit of a content of the functional additive may be about 1 part by weight, 2 parts by weight, 3 parts by weight, 4 parts by weight, or 5 parts by weight, and an upper limit thereof may be 20 parts by weight, 18 parts by weight, 16 parts by weight, 14 parts by weight, 12 parts by weight, 10 parts by weight, 9 parts by weight, 8 parts by weight, 7 parts by weight, 6 parts by weight, or 5 parts by weight.

The functional additive may be included in an amount that is greater than or equal to, or greater than any one of the above-described lower limits; less than or equal to, or less than any one of the above-described upper limits; or within a range of greater than or equal to, or greater than any one of the above-described lower limits, and less than or equal to, or less than any one of the above-described upper limits, based on 100 parts by weight of the second ion conductor.

The membrane-electrode assembly for a water electrolysis cell may further comprise an ionomer-rich layer positioned between the catalyst layer for an oxygen evolution reaction and the polymer electrolyte membrane, wherein the ionomer-rich layer comprises the second ion conductor. The ionomer-rich layer may be formed by the second ion conductor that is not coated on the surface of the catalyst layer for an oxygen evolution reaction, and the ionomer-rich may improve the interfacial binding strength between the polymer electrolyte membrane and the catalyst layer for an oxygen evolution reaction, and improve mass transfer, performance, and durability.

That is, the ionomer-rich layer may be formed while undergoing a drying process according to a method for manufacturing a membrane-electrode assembly according to an embodiment. The catalyst layer for an oxygen evolution reaction comprises the ionomer-rich layer and a layer other than the ionomer-rich layer, wherein the layer other than the ionomer-rich layer is referred to as an A layer for convenience.

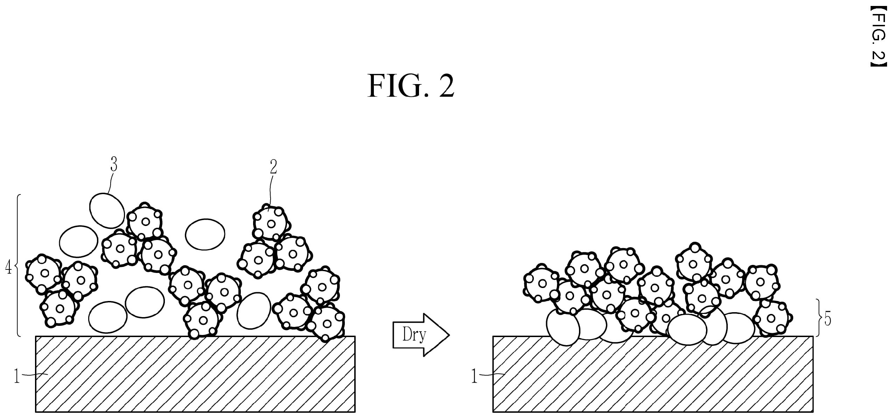

The A layer may not include the second ion conductor at all, or as illustrated in FIG. 2, may include a smaller amount of the second ion conductor per unit volume than the ionomer-rich layer.

The ionomer-rich layer may also further comprise the first ion conductor remaining without being coated on the surface of the catalyst for an oxygen evolution reaction. Such a first ion conductor may be present when mixed with the second ion conductor without removing the uncoated first ion conductor.

That is, due to such an ionomer-rich layer, the interfacial binding strength between the polymer electrolyte membrane and the catalyst layer for an oxygen evolution reaction may be increased, and mass transfer, performance, and durability may be improved.

The hydrogen evolution electrode refers to an electrode at which a Hydrogen Evolution Reaction (HER) occurs.

The hydrogen evolution electrode may comprise a catalyst for a hydrogen evolution reaction. The catalyst for a hydrogen evolution reaction may comprise active particles and a support.

The active particles may comprise a noble metal.

For example, the noble metal may be a platinum-based noble metal.

As the platinum-based noble metal (platinum based precious metal), platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support.

The carbon-based support may be graphite, super P, carbon fiber, carbon sheet, carbon black, Ketjen Black, Denka black, acetylene black, carbon nano tube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The oxygen evolution electrode and the hydrogen evolution electrode may each comprise only a catalyst layer respectively including the catalyst for an oxygen evolution reaction and the catalyst for a hydrogen evolution reaction, but may comprise an electrode substrate together with the catalyst layer.

In this case, the electrode substrate may serve to support the electrode while serving to diffuse a fuel and an oxidant to the catalyst layer.

The electrode substrate may comprise a microporous layer, a porous transport layer, or a combination thereof.

The microporous layer performs a role of enhancing a reactant diffusion effect, and generally may include a conductive powder having a small particle diameter, for example, carbon powder, carbon black, acetylene black, activated carbon, metal oxide nanowires, carbon fibers, fullerenes, carbon nanotubes, carbon nanowires, carbon nano-horns, or carbon nano rings.

The porous transport layer comprises porous titanium (Porous Titnia), carbon paper, carbon cloth, carbon felt, or metal cloth (referring to a porous film consisting of a fibrous metal cloth, or one in which a metal film is formed on a surface of a cloth formed of polymer fibers).

The microporous layer and the porous transport layer may comprise known ones in addition to those exemplified above.

The electrode substrate may be one that is water-repellent treated with a fluorine-based resin, and in this case, it is possible to prevent a reactant diffusion efficiency from being degraded by water generated during operation of a water electrolysis cell.

As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

The electrode substrate may improve conductivity using platinum or the like and may prevent corrosion of the porous transport layer by an ion conductor, thereby preventing degradation of water electrolysis performance.

The polymer electrolyte membrane has an ion exchange function of transferring hydrogen ions generated in the oxygen evolution electrode to the catalyst for a hydrogen evolution reaction.

A polymer electrolyte membrane according to an embodiment may comprise a porous support including a plurality of pores, and an ion conductor filling the pores of the porous support.

The porous support may be a fluorine-based support or a nanoweb support.

The fluorine-based support may correspond to, for example, expanded polytetrafluoroethylene (e-PTFE) having a microstructure of polymer fibrils or a microstructure in which nodes are connected to each other by fibrils. In addition, a film having a microstructure of polymer fibrils in which the nodes do not exist may also be used as the porous support.

The nanoweb support may be a support in which nanofibers are integrated into a nonwoven fabric form including a plurality of pores.

The ion conductor may include a fluorine-based ion conductor, a hydrocarbon-based ion conductor, or a combination thereof. The types of the fluorine-based ion conductor and the hydrocarbon-based ion conductor are the same as described above.

The ion conductor included in the polymer electrolyte membrane may be the same as or different from the first ion conductor and/or the second ion conductor included in the oxygen evolution electrode, and for example, the ion conductor included in the polymer electrolyte membrane may be the same as the first ion conductor and/or the second ion conductor included in the oxygen evolution electrode.

### Method for manufacturing a membrane-electrode assembly for a water electrolysis cell

A method for manufacturing a membrane-electrode assembly for a water electrolysis cell according to an embodiment comprises mixing a catalyst for an oxygen evolution reaction and a first ion conductor and then performing a heat treatment to prepare the catalyst for an oxygen evolution reaction coated with the first ion conductor (S1); adding the catalyst for an oxygen evolution reaction coated with the first ion conductor and a second ion conductor to a solvent to prepare a composition for forming a catalyst layer (S2); and forming a catalyst layer for an oxygen evolution reaction on at least one surface of a polymer electrolyte membrane by using the composition for forming a catalyst layer (S3).

First, a catalyst for an oxygen evolution reaction and a first ion conductor are mixed and then a heat treatment is performed to prepare the catalyst for an oxygen evolution reaction coated with the first ion conductor (hereinafter, "Step S1").

The catalyst for an oxygen evolution reaction refers to a catalyst prior to being coated with the first ion conductor, and the catalyst for an oxygen evolution reaction coated with the first ion conductor refers to the catalyst coated with the first ion conductor.

Hereinafter, the catalyst for an oxygen evolution reaction and the catalyst for an oxygen evolution reaction coated with the first ion conductor will be described in more detail with reference to the drawings.

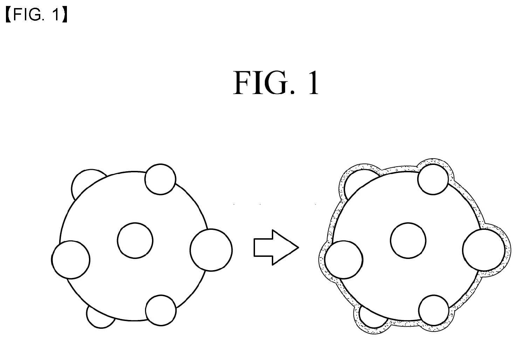

FIG. 1 is a schematic diagram illustrating a process of forming a catalyst for an oxygen evolution reaction, the catalyst being coated with a first ion conductor, according to an embodiment. The left side of FIG. 1 illustrates the catalyst for an oxygen evolution reaction before the first ion conductor is coated, and the right side of FIG. 1 illustrates the catalyst for an oxygen evolution reaction after the first ion conductor is coated.

Referring to the right side of FIG. 1, the catalyst for an oxygen evolution reaction coated with the first ion conductor comprises the catalyst for an oxygen evolution reaction and a coating layer coating a surface of the catalyst for an oxygen evolution reaction. The coating layer comprises the first ion conductor.

The catalyst for an oxygen evolution reaction may solely comprise the active particles or may further comprise a support supporting the active particles.

The active particles may comprise the first noble metal oxide.

The support may comprise a second noble metal oxide different from the first noble metal oxide.

The types of the first noble metal oxide and the second noble metal oxide are as described in the "1. Membrane-electrode assembly for a water electrolysis cell" section.

The types of the first ion conductor are as described in the "1. membrane-electrode assembly of a water electrolysis cell" section.

The first ion conductor may be used together with a binder such as a non-conductive compound for the purpose of further improving adhesion to the polymer electrolyte membrane. The amount of the binder used may be adjusted to be suitable for the purpose of use.

The non-conductive compound may be polytetrafluoroethylene (PTFE), tetrafluoroethylene-hexafluoropropylene copolymer (FEP), tetrafluoroethylene-perfluoroalkyl vinyl ether copolymer (PFA), ethylene/tetrafluoroethylene (ETFE), ethylene chlorotrifluoro-ethylene copolymer (ECTFE), polyvinylidene fluoride, a copolymer of polyvinylidene fluoride-hexafluoropropylene (PVdF-HFP), dodecylbenzenesulfonic acid, sorbitol (sorbitol), or a mixture thereof.

When mixing the catalyst for an oxygen evolution reaction and the first ion conductor, contents thereof may be appropriately adjusted.

For example, the first ion conductor may be mixed in an amount within a predetermined range with respect to 100 parts by weight of the catalyst for an oxygen evolution reaction.

A lower limit, an upper limit, and a range of the content of the first ion conductor with respect to 100 parts by weight of the catalyst for an oxygen evolution reaction are as described in the "1. membrane-electrode assembly for a water electrolysis cell".

The mixing may proceed by adding the catalyst for an oxygen evolution reaction and the first ion conductor to a solvent, wherein the solvent may be water, a hydrophilic solvent, an organic solvent, or a mixture thereof.

The hydrophilic solvent may comprise a functional group of alcohol, ketone, aldehyde, carbonate, carboxylate, carboxylic acid, ether, amide, or a combination thereof including a linear or branched saturated or unsaturated hydrocarbon having 1 to 12 carbon atoms as a main chain, and they may include an aliphatic or aromatic cyclic compound (aliphatic or aromatic cyclic compound) as at least a portion of the main chain. For example, the alcohol may be methanol, ethanol, isopropyl alcohol, ethoxy ethanol, n-propyl alcohol, butyl alcohol, 1,2-propanediol, 1-pentanol, 1,5-pentanediol, or 1,9-nonanediol, the ketone may be heptanone or octanone, the aldehyde may be benzaldehyde or tolualdehyde, the ester may be methyl pentanoate or ethyl-2-hydroxypropanoate, the carboxylic acid may be pentanoic acid or heptanoic acid, the ether may be methoxybenzene or dimethoxypropane, and the amide may be propanamide, butylamide, or dimethylacetamide.

The organic solvent may be N-methylpyrrolidone, dimethyl sulfoxide, tetrahydrofuran, or a mixture thereof.

At least a portion of the first ion conductor may be coated on a surface of the catalyst for an oxygen evolution reaction by mixing the catalyst for an oxygen evolution reaction and the first ion conductor in the solvent and then performing a heat treatment.

The mixing method is not limited as long as it is a method by which the catalyst for an oxygen evolution reaction and the first ion conductor uniformly dispersed in the solvent. For example, a homogeneous mixer, a high-pressure disperser, a ball mill, a powder mixer, or a resonant acoustic mixer may be used.

In the step S1, the heat treatment may be performed at a temperature within a predetermined range for a predetermined time.

For example, a lower limit of the heat treatment temperature may be about 110°C, 112°C, 114°C, 116°C, 118°C, 120°C, 122°C, 124°C, 126°C, 128°C, 130°C, 132°C, 134°C, 136°C, 138°C, or 140°C, and an upper limit thereof may be about 220°C, 215°C, 210°C, 205°C, 200°C, 195°C, 190°C, 185°C, 180°C, 175°C, 170°C, 165°C, 160°C, 155°C, 150°C, 145°C, or 140°C.

A lower limit of the heat treatment time may be about 1 hour, 1.1 hours, 1.2 hours, 1.3 hours, 1.4 hours, 1.5 hours, 1.6 hours, 1.7 hours, 1.8 hours, 1.9 hours, or 2 hours, and an upper limit thereof may be about 4 hours, 3.8 hours, 3.6 hours, 3.4 hours, 3.2 hours, 3 hours, 2.8 hours, 2.6 hours, 2.4 hours, 2.2 hours, or 2 hours.

The temperature and time of the heat treatment may each be greater than or equal to, or greater than any one of the lower limits described above; be less than or equal to, or less than any one of the upper limits described above; or have a range of greater than or equal to, or greater than any one of the lower limits described above, while being less than or equal to, or less than any one of the upper limits described above.

In the step S1, drying after the mixing and before the heat treatment may be further included.

The drying may be performed using various drying methods, such as hot air drying, vacuum drying, or infrared (IR) drying. A temperature and a time of the drying may be appropriately adjusted according to a boiling point (BP) of the solvent used.

The drying may be performed at a temperature within a predetermined range for a predetermined time.

For example, a lower limit of the drying temperature may be about 80°C, 81°C, 82°C, 83°C, 84°C, 85°C, 86°C, 87°C, 88°C, 89°C, or 90°C, and an upper limit thereof may be about 100°C, 99°C, 98°C, 97°C, 96°C, 95°C, 94°C, 93°C, 92°C, 91°C, or 90°C.

In addition, a lower limit of the drying time may be about 2 hours, 2.5 hours, 3 hours, 3.5 hours, 4 hours, 4.5 hours, or 5 hours, and an upper limit thereof may be about 8 hours, 7.5 hours, 7 hours, 6.5 hours, 6 hours, 5.5 hours, or 5 hours.

The temperature and time of the drying may be greater than or equal to, or greater than any one of the lower limits described above; be less than or equal to, or less than any one of the upper limits described above; or have a range of greater than or equal to, or greater than any one of the lower limits described above and less than or equal to, or less than any one of the upper limits described above.

Next, a composition for forming a catalyst layer is prepared by adding the catalyst for an oxygen evolution reaction coated with the first ion conductor prepared in the step S1, and the second ion conductor to a solvent (hereinafter, "step S2").

By first preparing the catalyst for an oxygen evolution reaction coated with the first ion conductor and then adding the second ion conductor to the catalyst for an oxygen evolution reaction coated with the first ion conductor, the settling of the second ion conductor may be facilitated during a drying process described later, and thus an ionomer-rich layer may be formed on a side of the polymer electrolyte membrane.

In the step S2, the solvent is the same as described in the step S1.

The meaning and type of the second ion conductor are as described in the "1. membrane-electrode assembly for a water electrolysis cell".

The second ion conductor may be added to be within a predetermined range with respect to 100 parts by weight of the catalyst for an oxygen evolution reaction coated with the first ion conductor.

A lower limit of a content of the second ion conductor may be about 4 parts by weight, 5 parts by weight, 6 parts by weight, 7 parts by weight, 8 parts by weight, 9 parts by weight, 10 parts by weight, 12.5 parts by weight, 15 parts by weight, 17.5 parts by weight, 20 parts by weight, 22.5 parts by weight, 25 parts by weight, 27.5 parts by weight, 30 parts by weight, 32.5 parts by weight, 35 parts by weight, 37.5 parts by weight, 40 parts by weight, 40.5 parts by weight, 41 parts by weight, or 41.5 parts by weight, and an upper limit thereof may be about 70 parts by weight, 68 parts by weight, 66 parts by weight, 64 parts by weight, 62 parts by weight, 60 parts by weight, 58 parts by weight, 56 parts by weight, 54 parts by weight, 52 parts by weight, 50 parts by weight, 48 parts by weight, 46 parts by weight, 44 parts by weight, or 42 parts by weight.

The second ion conductor may be added in an amount that is greater than or equal to, or greater than any one of the above-described lower limits; less than or equal to, or less than any one of the above-described upper limits; or within a range of greater than or equal to, or greater than any one of the above-described lower limits, and less than or equal to, or less than any one of the above-described upper limits, based on 100 parts by weight of the catalyst for an oxygen evolution reaction coated with the first ion conductor.

In the step S2, a functional additive may be further added together with the second ion conductor to prepare the composition for forming a catalyst layer.

The type and addition amount of the functional additive are as described in the "1. membrane-electrode assembly for a water electrolysis cell".

In the step S2, the catalyst for an oxygen evolution reaction coated with the first ion conductor and the second ion conductor may be added to the solvent, and then mixed. In a case where the functional additive is further added, the catalyst for an oxygen evolution reaction coated with the first ion conductor, the second ion conductor, and the functional additive may be mixed.

The mixing method is as described in the step S1.

Next, a catalyst layer for an oxygen evolution reaction is formed on at least one surface of the polymer electrolyte membrane using the composition for forming a catalyst layer prepared according to the step S2 (hereinafter, "step S3").

In the step S3, forming the catalyst layer for an oxygen evolution reaction may comprise directly coating the composition for forming a catalyst layer on the polymer electrolyte membrane, or coating the composition for forming a catalyst layer on a substrate to form the catalyst layer for an oxygen evolution reaction and then transferring the catalyst layer for an oxygen evolution reaction onto the polymer electrolyte membrane.

According to an embodiment, the catalyst layer for an oxygen evolution reaction may be formed by directly coating the composition for forming a catalyst layer on the polymer electrolyte membrane.

When the catalyst layer for an oxygen evolution reaction is formed by directly coating the composition for forming a catalyst layer on only one surface of the polymer electrolyte membrane, a hydrogen evolution electrode may be formed on the other surface by a catalyst coated substrate (CCS) method or another catalyst coated membrane (CCM) method other than the direct coating.

When directly coating the composition for forming a catalyst layer on the polymer electrolyte membrane, the composition for forming a catalyst layer, in which the catalyst for an oxygen evolution reaction coated with the first ion conductor is dispersed, may be continuously or intermittently transferred to a coater and then uniformly applied to a constant thickness on the polymer electrolyte membrane.

For example, the composition for forming a catalyst layer may be continuously transferred to a coater such as a die, a gravure, a bar, or a comma coater, and then applied using a method such as slot die coating, bar coating, comma coating, screen printing, spray coating, doctor blade coating, or brush coating.

According to another embodiment, the catalyst layer for an oxygen evolution reaction may be formed by coating the composition for forming a catalyst layer on a substrate to form the catalyst layer for an oxygen evolution reaction, and then transferring the catalyst layer for an oxygen evolution reaction onto the polymer electrolyte membrane.

When the catalyst layer for an oxygen evolution reaction is formed on only one surface of the polymer electrolyte membrane according to the transfer process, a hydrogen evolution electrode may be formed on the other surface by a catalyst coated substrate (CCS) method or another catalyst coated membrane (CCM) method other than the direct coating.

The type of the substrate is not limited as long as it may have releasability. For example, the substrate may include polyethylene glycol (PEG), polyethylene (PE), polyvinyl chloride (PVC), polypropylene (PP), polyolefin (PO), polyvinyl alcohol (PVA), polyurethane (PU), nylon, polycarbonate (PC), polyester, polyacrylonitrile (PAN), polyacetal (POM), polytetrafluoroethylene (PTFE), fluorinated ethylene propylene (FEP), cyclic polyolefin (COP), modified PPO (MPPO), polyethylene terephthalate (PET), acrylonitrile-butadiene-styrene copolymer (ABS), polymethyl methacrylate (PMMA), polyethylene naphthalate (PEN), polyether sulfone (PES), cyclic olefin copolymer (COC), a TAC (triacetylcellulose) film, a polyvinyl alcohol (PVA) film, a polyimide (PI) film, polystyrene (PS), or a mixture thereof.

The transfer process may use a known method.

According to the method for manufacturing the membrane-electrode assembly, the second ion conductor not coated on the surface of the catalyst for an oxygen evolution reaction may be used to improve an interfacial binding strength between the polymer electrolyte membrane or the porous transport layer (PTL) and the catalyst layer for an oxygen evolution reaction, improve mass transfer, performance, and durability, and increase hydrogen permeation resistance or oxygen permeability.

The method for manufacturing the membrane-electrode assembly may further comprise a drying step after the step S3. In the drying step, the second ion conductor not coated on the surface of the catalyst for an oxygen evolution reaction may settle toward the polymer electrolyte membrane or the porous transport layer (PTL) to form an ionomer-rich layer.

The type of the drying method performed in the drying step is the same as described in the drying of the step S1.

For example, a lower limit of the temperature of the drying step may be about 60°C, 65°C, 70°C, 75°C, 80°C, 85°C, or 90°C, and an upper limit thereof may be about 110°C, 108°C, 106°C, 104°C, 102°C, 100°C, 98°C, 96°C, 94°C, 92°C, or 90°C.

In addition, a lower limit of the time of the drying step may be about 3 minutes, 5 minutes, 7 minutes, 9 minutes, 10 minutes, 12 minutes, 14 minutes, 16 minutes, 18 minutes, or 20 minutes, and an upper limit thereof may be about 50 minutes, 45 minutes, 40 minutes, 35 minutes, 30 minutes, or 20 minutes.

The time and temperature of the drying step may respectively be greater than or equal to, or greater than any one of the above-described lower limits; be less than or equal to, or less than any one of the above-described upper limits; or have a range of greater than or equal to, or greater than any one of the above-described lower limits and less than or equal to, or less than any one of the above-described upper limits.

FIG. 2 is a schematic diagram illustrating that, as a composition for forming a catalyst layer is directly coated on one surface of a polymer electrolyte membrane and then dried in a method for manufacturing a membrane-electrode assembly according to an embodiment, a second ion conductor settles to an interface between the polymer electrolyte membrane and a catalyst layer for an oxygen evolution reaction.

Referring to the left side of FIG. 2, it may be confirmed that in the composition for forming a catalyst layer (4) coated on the polymer electrolyte membrane (1), the catalyst for an oxygen evolution reaction (2) coated with the first ion conductor and the second ion conductor (3) are uniformly distributed.

Referring to the right side of FIG. 2, through the drying process, the second ion conductor settles toward the polymer electrolyte membrane (1) to form the ionomer-rich layer (5). Although it is illustrated in FIG. 2 that all of the second ion conductor settles and exists only in the ionomer-rich layer (5), it is not limited thereto. For example, the second ion conductor may be positioned not only in the ionomer-rich layer, but also between the catalysts for an oxygen evolution reaction, which are coated with the first ion conductor, on the ionomer-rich layer.

In the step S3, in a case of coating the composition for forming a catalyst layer on the substrate to form the catalyst layer for an oxygen evolution reaction and then transferring the catalyst layer for an oxygen evolution reaction to the polymer electrolyte membrane to form the catalyst layer for an oxygen evolution reaction, a drying step may be performed after coating on the substrate.

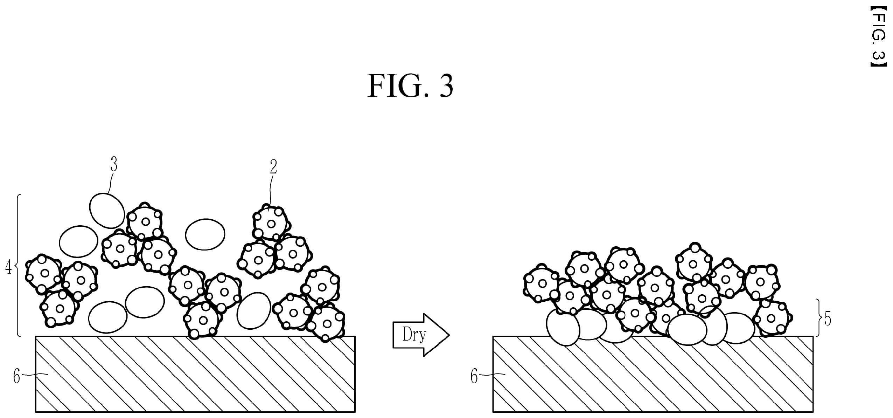

FIG. 3 is a schematic diagram illustrating that, as a composition for forming a catalyst layer is coated on a substrate and then dried in a method for manufacturing a membrane-electrode assembly according to an embodiment, a second ion conductor settles to an interface between the substrate and a catalyst layer for an oxygen evolution reaction.

The left side of FIG. 3 illustrates a state in which the composition for forming a catalyst layer (4) is coated on the substrate (6).

The right side of FIG. 3 illustrates that, as the drying step is performed while the composition for forming a catalyst layer is coated on the substrate, the second ion conductor settles toward the substrate (6) at the interface between the substrate and the catalyst layer for an oxygen evolution reaction. thereby forming the ionomer-rich layer (5).

The second ion conductor may settle toward the substrate (6) to form the ionomer-rich layer (5), and the second ion conductor may be positioned not only in the ionomer-rich layer, but also between the catalysts for an oxygen evolution reaction coated with the first ion conductor on the ionomer-rich layer.

In a case where the catalyst layer for an oxygen evolution reaction, having the ionomer-rich layer formed thereon, is transferred to the polymer electrolyte membrane, and the catalyst layer for an oxygen evolution reaction is formed on the polymer electrolyte membrane according to the transfer process, the ionomer-rich layer may be formed on a surface opposite to the interface between the polymer electrolyte membrane and the catalyst layer for an oxygen evolution reaction.

A porous transport layer (PTL) may later be positioned on the interface on which the ionomer-rich layer is formed, and accordingly, a bond between the porous transport layer and the catalyst layer for an oxygen evolution reaction may be strengthened.

### Water electrolysis cell

A water electrolysis cell according to an embodiment may comprise the membrane-electrode assembly.

Since the water electrolysis cell is the same as a known one except for comprising the membrane-electrode assembly according to the present application, a detailed description thereof will be omitted.

### [Mode for Invention]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

### Preparation Example 1. Catalyst for an oxygen evolution reaction coated with the first ion conductor (A)

A solvent in which water and ethanol were mixed at a weight ratio of 9:1 (= water:ethanol) was put into a reaction vessel, and commercial IrOₓ/TiO₂ from Heraeus as a catalyst for an oxygen evolution reaction and an amorphous first ion conductor (EW=1000 g/eq) were added to the solvent and dispersed using a homogenizer to prepare a dispersion mixture.

In this case, about 10 g of commercial IrOₓ/TiO₂ from Heraeus was added such that the solid content became 3%, and the first ion conductor was added in an amount of 20 parts by weight based on 100 parts by weight of the commercial IrOₓ/TiO₂.

After the dispersion compound was dried at 90°C for 5 hours, the dried dispersion mixture was heat-treated at 140°C for 2 hours.

As a result, the catalyst for an oxygen evolution reaction coated with the first ion conductor (A) was formed, in which a coating layer including the first ion conductor was formed on a surface of the catalyst for an oxygen evolution reaction.

The thickness of the coating layer was about 3 nm, and the area of the coating layer relative to an entire surface of the catalyst for an oxygen evolution reaction according to Evaluation Example 1 was about 85% on average.

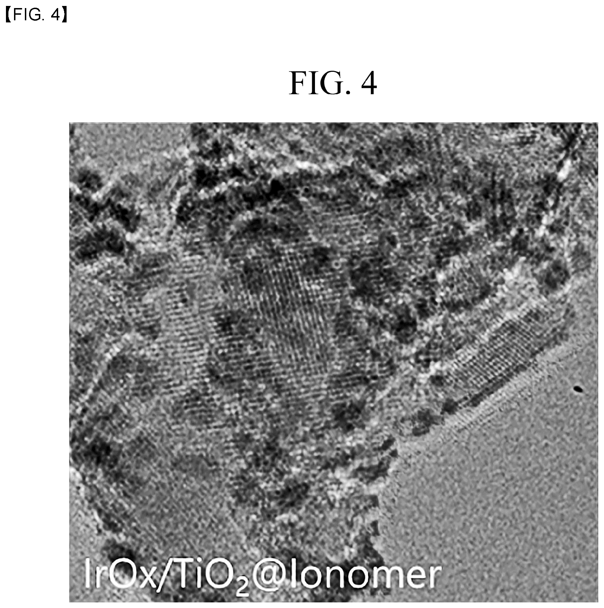

A transmission electron microscope (TEM) image of the catalyst for an oxygen evolution reaction coated with the first ion conductor (A) is illustrated in FIG. 4.

### Preparation Example 2. Catalyst for an oxygen evolution reaction coated with the first ion conductor (B)

A catalyst for an oxygen evolution reaction coated with the first ion conductor (B) was prepared in the same manner as in Preparation Example 1, except that 3.5 parts by weight instead of 20 parts by weight of the first ion conductor was added with respect to 100 parts by weight of the commercial IrOₓ/TiO₂ in Preparation Example 1.

In this case, the thickness of the coating layer was about 1 nm, and the area of the coating layer relative to an entire surface of the catalyst for an oxygen evolution reaction according to Evaluation Example 1 was about 50% on average.

### Example 1-1.

A solvent in which water and n-propanol were mixed at a weight ratio of 4:6 (= water:n-propanol) was introduced into a reaction vessel, the catalyst for an oxygen evolution reaction coated with the first ion conductor (A) according to Preparation Example 1 was dispersed in the solvent using a homogeneous mixer, and a second ion conductor (EW=720 g/eq) was added in an amount 1.5 times an added amount of the first ion conductor and dispersed using the homogeneous mixer to prepare a composition for forming a catalyst layer.

The second ion conductor was added in an amount of about 41.6 parts by weight based on 100 parts by weight of the catalyst for an oxygen evolution reaction coated with the first ion conductor.

The composition for forming a catalyst layer was directly applied to one surface of the polymer electrolyte membrane having a thickness of 100 *µ*m to a coating thickness of 150 *µ*m using a slot die, and dried with hot air at a temperature of 90°C for 20 minutes, thereby forming a catalyst layer for an oxygen evolution reaction on one surface of the membrane-electrode assembly. A hydrogen evolution electrode (Tanaka, TEC10E50E) was formed on the other surface on which the catalyst layer for an oxygen evolution reaction was not formed to manufacture a membrane-electrode assembly.

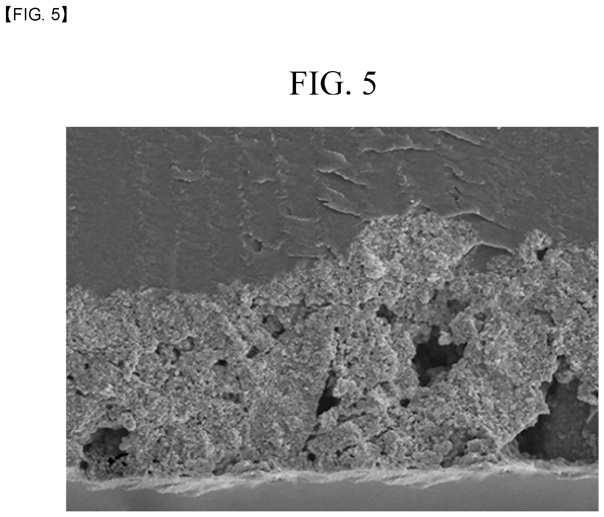

A scanning electron microscope (SEM) cross-sectional analysis result of the membrane-electrode assembly manufactured in Example 1-1 is illustrated in FIG. 5.

As may be seen in FIG. 5, an oxygen evolution electrode having an average thickness of 3 µm and an ionomer-rich layer toward the polymer electrolyte membrane was formed.

### Example 1-2.

In Example 1-1, a membrane-electrode assembly was manufactured in the same manner as in Example 1-1, except that CeO₂ from Sigma-Aldrich was further added as a functional additive together with the second ion conductor.

In this case, the functional additive was added in an amount of about 5 parts by weight based on 100 parts by weight of the second ion conductor.

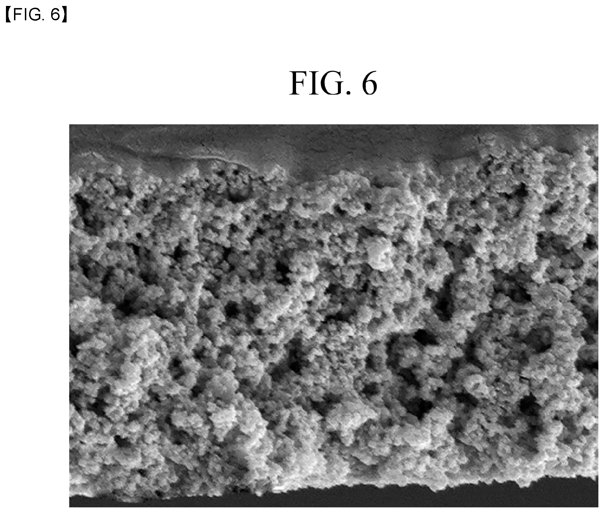

A scanning electron microscope (SEM) cross-sectional analysis result of the membrane-electrode assembly manufactured in Example 1-2 is illustrated in FIG. 6.

As can be seen in FIG. 6, an oxygen evolution electrode having an average thickness of 3 µm and containing CeO₂ particles was formed in an ionomer-rich layer toward the polymer electrolyte membrane.

### Example 2-1.

A solvent in which water and n-propanol were mixed at a weight ratio of 4:6 (= water:n-propanol) was introduced into a reaction vessel, the catalyst for an oxygen evolution reaction coated with the first ion conductor (A) according to Preparation Example 1 was dispersed in the solvent using a homogeneous mixer, and a second ion conductor (EW=720 g/eq) was added in an amount 1.5 times the added amount of the first ion conductor and dispersed using the homogeneous mixer to prepare a composition for forming a catalyst layer.

The second ion conductor was added in an amount of about 41.6 parts by weight based on 100 parts by weight of the catalyst for an oxygen evolution reaction coated with the first ion conductor.

The composition for forming a catalyst layer was directly applied to one surface of a polyimide film from PI Advanced Materials having a thickness of 150 *µ*m as a substrate to a coating thickness of 150 *µ*m using a slot die to form a catalyst layer for an oxygen evolution reaction.

A membrane-electrode assembly was manufactured in the same manner as in Example 1-1, except that the catalyst layer for an oxygen evolution reaction was transferred onto one surface of the polymer electrolyte membrane having a thickness of 100 *µ*m under a temperature of 160°C at a pressure of 2 MPa for 3 minutes, and a hydrogen evolution electrode was formed on the other surface of the polymer electrolyte membrane.

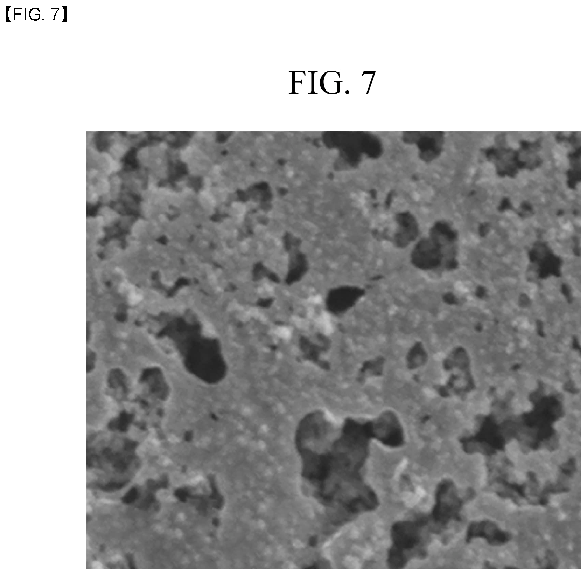

A scanning electron microscope (SEM) cross-sectional analysis result of the membrane-electrode assembly manufactured in Example 2-1 is illustrated in FIG. 7.

### Example 2-2.

In Example 2-1, a membrane-electrode assembly was manufactured in the same manner as in Example 2-1, except that h-BN (hexagonal boron nitride) from Sigma-Aldrich was further added as a functional additive together with the second ion conductor.

In this case, the functional additive was added in an amount of about 5 parts by weight based on 100 parts by weight of the second ion conductor.

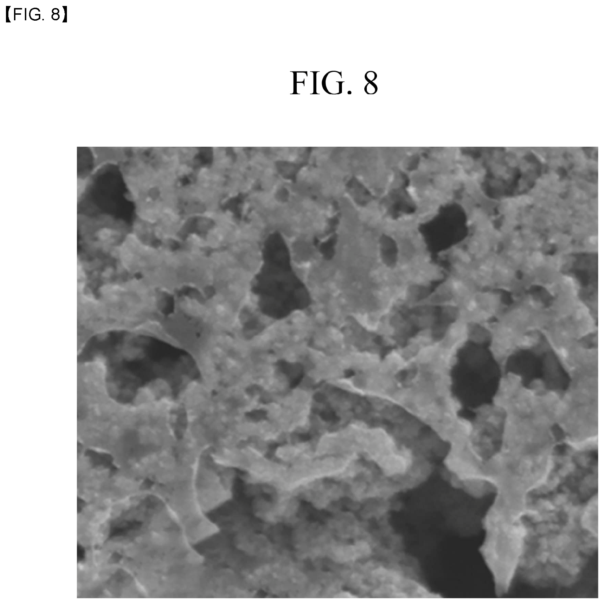

A scanning electron microscope (SEM) cross-sectional analysis result of the membrane-electrode assembly manufactured in Example 2-2 is illustrated in FIG. 8.

### Example 3.

In Example 1-1, a membrane-electrode assembly was manufactured in the same manner as in Example 1-1, except that the catalyst for an oxygen evolution reaction coated with the first ion conductor (B) according to Preparation Example 2 was used instead of the catalyst for an oxygen evolution reaction coated with the first ion conductor (A) according to Preparation Example 1.

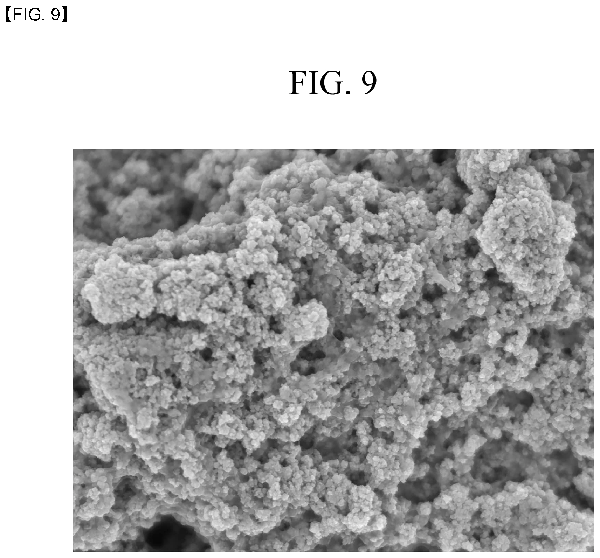

A scanning electron microscope (SEM) cross-sectional analysis result of the membrane-electrode assembly manufactured in Example 3 is illustrated in FIG. 9.

### Comparative Example 1.

In Example 1-1, a membrane-electrode assembly was manufactured in the same manner as in Example 1-1, except that commercial IrOₓ/TiO₂ (Alfa Aesar, 43396) not coated with the first ion conductor was used.

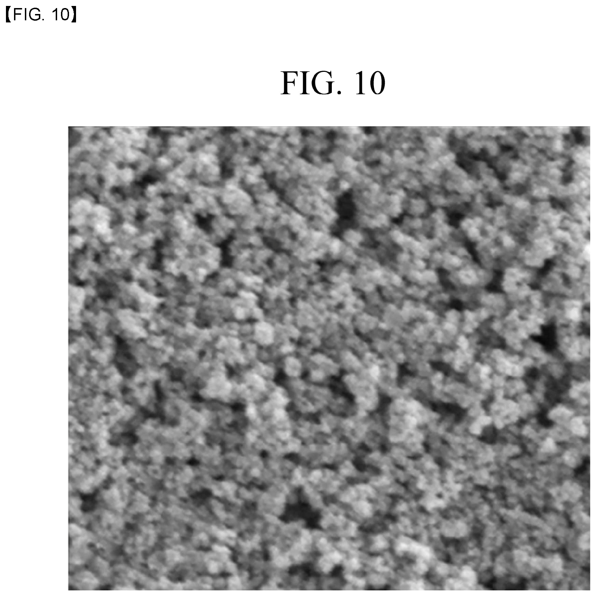

A scanning electron microscope (SEM) cross-sectional analysis result of the membrane-electrode assembly manufactured in Comparative Example 1 is illustrated in FIG. 10.

### Evaluation Example 1. Measurement of Area of Coating Layer Relative to Total Area of Catalyst for an Oxygen Evolution Reaction

Regarding the area of the coating layer in Preparation Examples 1 and 2, the area of the first ion conductor coated on surfaces of 100 catalysts randomly selected from a TEM image was measured, and the area of the coating layer was determined as an average value of the 100 areas.

### Evaluation Example 2. Measurement of Dispersion Stability

The evaluation of the dispersion stability of the catalysts for an oxygen evolution reaction according to Preparation Examples 1 and 2 and Comparative Example 1 was performed by the following method.

As a catalyst for an oxygen evolution reaction, 1 g each of the catalysts for an oxygen evolution reaction (A) and (B), which are coated with the first ion conductor of Preparation Examples 1 and 2, respectively, and 1 g of the commercial IrOₓ/TiO₂ (Alfa Aesar, 43396) of Comparative Example 1 were added to manufacture an electrode, and after centrifuging at 10,000 rpm for 10 minutes and 30 minutes using a centrifuge device, a solution was extracted from a middle portion of the solution to measure a reduction in solid content through a solid content analysis.

The results of evaluating the dispersion stability of the Preparation Examples and the Comparative Example according to the above method are shown in Table 1.

**[Table 1]**

| | Preparation Example 1 | Preparation Example 2 | Comparative Example 1 |
|---|---|---|---|
| 10 minutes treatment | 5% | 9% | 11% |
| 30 minutes treatment | 12% | 19% | 25% |

As shown in Table 1, it may be confirmed that Preparation Examples 1 and 2, in which a coating layer is formed on the surface of the catalyst for an oxygen evolution reaction, have excellent dispersion stability compared to the Comparative Example in which it is not formed, and it may be confirmed that Preparation Example 1 in which the area of the coating layer relative to the entire surface of the catalyst for an oxygen evolution reaction is 85% on average has excellent dispersion stability compared to Preparation Example 2 in which the area is 50% on average.

### Evaluation Example 3. I-V Characteristics

The membrane-electrode assemblies manufactured in Examples 1-1 to 3 and Comparative Example 1 were applied into a unit cell designed and manufactured for a water electrolysis cell, and measured by applying a protocol for measuring a voltage and a resistance at a specific current from 1 mA to 20 A under conditions of a cell temperature of 80°C, a water temperature of 80°C, and a flow rate of 5 ml/min, and the measurement was stopped at 2 V.

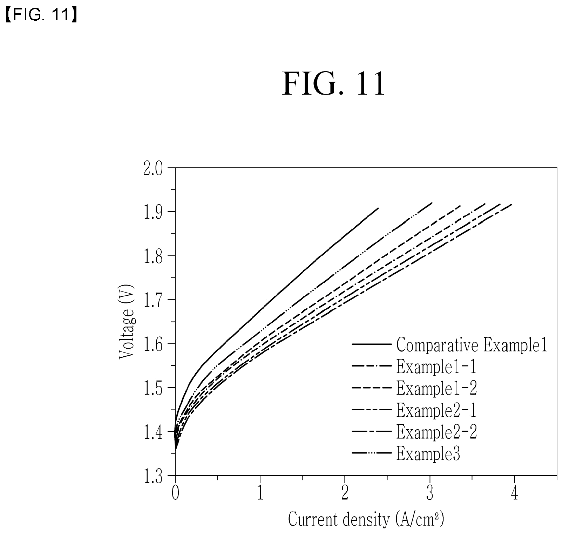

The result at this time is shown in FIG. 11.

### Evaluation Example 4. Durability Evaluation

The membrane-electrode assemblies prepared in Examples 1-1 to 3 and Comparative Example 1 were applied to the inside of a unit cell designed and manufactured for a water electrolysis cell, and after operating a constant current for 500 hours at a cell temperature of 80°C and a current density of 1 A/cm², a voltage increase rate was measured.

The measurement of the voltage was performed using a Potentiostat instrument from BioLogic, and the voltage increase rate was calculated according to Equation 1 below using the measured voltage. The results at this time are as shown in Table 2 below. [Equation 1] 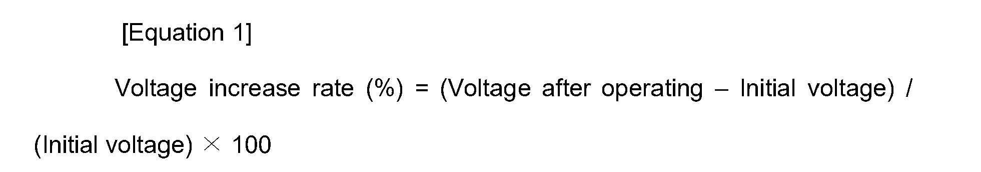 Voltage increase rate (%) = (Voltage after operating - Initial voltage)/ (Initial voltage) × 100

**[Table 2]**

| | Example 1-1 | Example 1-2 | Example 2-1 | Example 2-2 | Example 3 | Comparative Example 1 |
|---|---|---|---|---|---|---|
| Voltage increase rate (%) | 5.6 | 2.2 | 5.8 | 3.5 | 10.2 | 16.2 |

As shown in Table 2, the membrane-electrode assemblies according to Examples 1-1 to 3 exhibited better chemical durability with less voltage loss than the membrane-electrode assembly according to Comparative Example 1. According to Example 1-1 and Example 3, it may be confirmed that as the area of the coating layer coated with the first ion conductor increases relative to the total surface of the catalyst for an oxygen evolution reaction, the catalyst exhibits durability with less voltage loss.

Although the preferred embodiments have been described in detail above, the scope of rights is not limited thereto, and various modifications and improvements made by those skilled in the art using the basic concept defined in the following claims also belong to the scope of rights.

### <Description of symbols>

1: polymer electrolyte membrane
2: catalyst for an oxygen evolution reaction coated with the first ion conductor
3: second ion conductor
4: composition for forming a catalyst layer
5: ionomer-rich layer
6: substrate

## Claims

1. A membrane-electrode assembly for a water electrolysis cell comprising:
a polymer electrolyte membrane; and
an oxygen evolution electrode positioned on one surface of the polymer electrolyte membrane and comprising a catalyst layer for an oxygen evolution reaction; and
a hydrogen evolution electrode positioned on the other surface of the polymer electrolyte membrane,
wherein the catalyst layer for an oxygen evolution reaction comprises:
a catalyst for an oxygen evolution reaction comprising active particles including a first noble metal oxide;
a coating layer coating a surface of the catalyst for an oxygen evolution reaction and including a first ion conductor; and
a second ion conductor not coated on the surface of the catalyst for an oxygen evolution reaction.

2. The membrane-electrode assembly for a water electrolysis cell of claim 1, wherein
the first noble metal oxide includes IrOₓ (wherein x is an integer of 1 to 3), RuOₓ (wherein x is an integer of 1 to 3), IrMOₓ (wherein M includes Ru, Pt, Sn, Se, Sb, Ta, Te, Nb, W, Zn, Au, or a combination thereof, and x is an integer of 1 to 3), or a combination thereof.

3. The membrane-electrode assembly for a water electrolysis cell of claim 1, wherein
the catalyst for an oxygen evolution reaction further comprises a support supporting the active particles, and
the support comprises a second noble metal oxide different from the first noble metal oxide.

4. The membrane-electrode assembly for a water electrolysis cell of claim 1, wherein
an area of the coating layer is greater than or equal to 30% relative to an entire surface area of the catalyst for an oxygen evolution reaction.

5. The membrane-electrode assembly for a water electrolysis cell of claim 1, wherein
a thickness of the coating layer is in a range of 1 nm to 15 nm.

6. The membrane-electrode assembly for a water electrolysis cell of claim 1, wherein
the first ion conductor is included in a range of 3 parts by weight to 50 parts by weight based on 100 parts by weight of the catalyst for an oxygen evolution reaction.

7. The membrane-electrode assembly for a water electrolysis cell of claim 1, wherein
the first ion conductor and the second ion conductor each independently include a fluorine-based ion conductor, a hydrocarbon-based ion conductor, or a combination thereof, and
the first ion conductor and the second ion conductor are identical to or different from each other.

8. The membrane-electrode assembly for a water electrolysis cell of claim 1, wherein
equivalent weight of the first ion conductor and the second ion conductor are each independently in a range of 600 g/eq to 1100 g/eq, and
the equivalent of the first ion conductor and the equivalent of the second ion conductor are different from each other.

9. The membrane-electrode assembly for a water electrolysis cell of claim 1, wherein
one of the first ion conductor and the second ion conductor is a fluorine-based ion conductor, and the other is a hydrocarbon-based ion conductor;
the first ion conductor is a first hydrocarbon-based ion conductor, and the second ion conductor is a second hydrocarbon-based ion conductor different from the first hydrocarbon-based ion conductor; or
the first ion conductor is a first fluorine-based ion conductor, and the second ion conductor is a second fluorine-based ion conductor different from the first fluorine-based ion conductor.

10. The membrane-electrode assembly for a water electrolysis cell of claim 1, wherein
the second ion conductor is included in a range of 20 parts by weight to 80 parts by weight based on 100 parts by weight of a total content of the first ion conductor and the second ion conductor included in the catalyst layer for an oxygen evolution reaction.

11. The membrane-electrode assembly for a water electrolysis cell of claim 1, wherein
the catalyst layer for an oxygen evolution reaction further comprises a functional additive including a radical scavenger, a gas barrier particle, a hydrophilic inorganic additive, a heat dissipation material, or a combination thereof.

12. The membrane-electrode assembly for a water electrolysis cell of claim 11, wherein
the functional additive is included in a range of 1 part by weight to 20 parts by weight based on 100 parts by weight of the second ion conductor.

13. The membrane-electrode assembly for a water electrolysis cell of claim 1, further comprising:
an ionomer-rich layer positioned between the catalyst layer for an oxygen evolution reaction and the polymer electrolyte membrane,
wherein the ionomer-rich layer comprises the second ion conductor.

14. The membrane-electrode assembly for a water electrolysis cell of claim 1, wherein
the hydrogen evolution electrode comprises:
a catalyst for hydrogen evolution comprising a carbon-based support, and active particles supported on the carbon-based support and including a noble metal.

15. The membrane-electrode assembly for a water electrolysis cell of claim 1, wherein
the polymer electrolyte membrane comprises a porous support including a plurality of pores, and an ion conductor filling the pores of the porous support.

16. A method for manufacturing a membrane-electrode assembly for a water electrolysis cell comprising:
mixing a catalyst for an oxygen evolution reaction and a first ion conductor and then performing a heat treatment to prepare the catalyst for an oxygen evolution reaction coated with the first ion conductor (S1);
adding the catalyst for an oxygen evolution reaction coated with the first ion conductor and a second ion conductor to a solvent to prepare a composition for forming a catalyst layer (S2); and
forming a catalyst layer for an oxygen evolution reaction on at least one surface of a polymer electrolyte membrane by using the composition for forming a catalyst layer (S3),
wherein the catalyst for an oxygen evolution reaction comprises active particles including a first noble metal oxide, and
the catalyst for an oxygen evolution reaction coated with the first ion conductor comprises the catalyst for an oxygen evolution reaction and a coating layer coating a surface of the catalyst for an oxygen evolution reaction and including the first ion conductor.

17. The method for manufacturing a membrane-electrode assembly for a water electrolysis cell of claim 16, wherein
in the step S1,
the heat treatment is performed at a temperature in a range of 110°C to 220°C for 1 hour to 4 hours.

18. The method for manufacturing a membrane-electrode assembly for a water electrolysis cell of claim 16, wherein
in the step S3,
the forming of the catalyst layer for an oxygen evolution reaction comprises:
directly coating the composition for forming a catalyst layer on the polymer electrolyte membrane, or
coating the composition for forming a catalyst layer on a substrate to form the catalyst layer for an oxygen evolution reaction and then transferring the catalyst layer for an oxygen evolution reaction onto the polymer electrolyte membrane.

19. The method for manufacturing a membrane-electrode assembly for a water electrolysis cell of claim 16, wherein the method further comprises:
a drying step performed after the step S3,
the drying step is performed at a temperature in a range of 60°C to 110°C for 3 minutes to 50 minutes, and
in the drying step, the second ion conductor not coated on the surface of the catalyst for an oxygen evolution reaction settles toward the polymer electrolyte membrane to form an ionomer-rich layer.

20. A water electrolysis cell comprising the membrane-electrode assembly according to claim 1.
